# EUROPEAN PATENT SPECIFICATION

(11) **EP 3 721 596 B1**
(45) Date of publication and mention of the grant of the patent: **02.11.2022**
(21) Application number: 17933965.0
(22) Date of filing: 04.12.2017
(51) Int. Cl.: H04L 9/40, H04L 41/28

(54) **NETWORK MANAGEMENT DEVICE AND CENTRALIZED AUTHORIZATION SERVER FOR NETCONF**
NETZWERKVERWALTUNGSVORRICHTUNG UND ZENTRALISIERTER AUTORISIERUNGSSERVER FÜR NETCONF
DISPOSITIF DE GESTION DE RÉSEAU ET SERVEUR D'AUTORISATION CENTRALISÉ POUR NETCONF

(43) Date of publication of application: 14.10.2020
(73) Proprietor: Telefonaktiebolaget LM Ericsson (publ), 164 83 Stockholm (SE)
(72) Inventor: HUANG, Yang, Beijing 100102 (CN); CHEN, Shi, Beijing 100102 (CN); LIU, Wenzhao, Beijing 100102 (CN)
(74) Representative: Ericsson
(86) International application number: PCT/CN2017/114458
(87) International publication number: WO 2019/109210

(56) References cited:
- CN-A- 101 237 443
- CN-A- 105 765 921
- CN-A- 106 454 823
- US-A1- 2008 056 161
- US-B1- 7 882 538
- FENG WANG ET AL: "The Architecture of Centralized Access Control Proxy Server Based on NETCONF", 2010 INTERNATIONAL CONFERENCE ON MEASURING TECHNOLOGY AND MECHATRONICS AUTOMATION : ICMTMA 2010 ; CHANGSHA CITY, CHINA, 13 - 14 MARCH 2010, IEEE, PISCATAWAY, NJ, USA, 13 March 2010 (2010-03-13), pages 810-813, XP031672219, ISBN: 978-1-4244-5001-5
- ENNS R ET AL: "NETCONF Configuration Protocol; rfc4741.txt", NETCONF CONFIGURATION PROTOCOL; RFC4741.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 December 2006 (2006-12-01), XP015048710,
- BIERMAN YUMAWORKS M BJORKLUND TAIL-F SYSTEMS A: "Network Configuration Protocol (NETCONF) Access Control Model; rfc6536.txt", NETWORK CONFIGURATION PROTOCOL (NETCONF) ACCESS CONTROL MODEL; RFC6536.TXT, INTERNET ENGINEERING TASK FORCE, IETF; STANDARD, INTERNET SOCIETY (ISOC) 4, RUE DES FALAISES CH- 1205 GENEVA, SWITZERLAND, 8 March 2012 (2012-03-08), pages 1-49, XP015081455, [retrieved on 2012-03-08]

## Description

### Technical Field

Embodiments of the disclosure generally relate to network communication, and, more particularly, to a network management device and a centralized authorization server for network configuration (NETCONF) protocol.

### Background

This section introduces aspects that may facilitate better understanding of the present disclosure. Accordingly, the statements of this section are to be read in this light and are not to be understood as admissions about what is in the prior art or what is not in the prior art.

With the development of cloud computing technologies, software defined network (SDN) has been proposed to facilitate network management and enable programmatically efficient network configuration. In the evolving could/SDN infrastructure, the dominant northbound interface is network configuration (NETCONF) protocol, which is a network management protocol developed and standardized by the Internet engineering task force (IETF). The first version of the base NETCONF protocol was published as request for comments (RFC) 4741 in December 2006. Several extensions were published in subsequent years. One of the extensions is RFC 6536 published in March 2012. It proposed an authorization solution, called NETCONF access control model (NACM), to restrict NETCONF protocol access for particular users to a pre-configured subset of all available NETCONF protocol operations and content.

For the above existing authorization solution, there is still some room for improvement.

In Feng W. et al, "The Architecture of Centralized Access Control Proxy Server Based on NETCINF", 2010 International Conference on Measuring Technology and Mechatronics Automation, ICMTMA 2010, 13-14 March 2010, IEEE, P.810-813, an architecture of centralized access control proxy server based on NETCONF for network management is disclosed. The architecture involves a network management station, an access control proxy server and a managed device. The centralized access control proxy server is responsible for centralized policy management, centralized authorization, centralized authentication. The network management station and managed device communicate through the access control proxy server.

US7882538B1 discloses a local access module that caches endpoint security information maintained by a remote server. When a user attempts to access a network resource through an endpoint device, the endpoint device sends authentication information and health information to the local access module. When the local access module receives the authentication information and the health information, the local access module controls access to the network resource based on the cached endpoint security information, the authentication information, and a security state of the endpoint device described by the health information.

### Summary

This summary is provided to introduce a selection of concepts in a simplified form that are further described below in the detailed description. This summary is not intended to identify key features or essential features of the claimed subject matter, nor is it intended to be used to limit the scope of the claimed subject matter.

One of the objects of the disclosure is to provide an improved authorization solution for NETCONF protocol.

The invention is defined by the appended claims.

These and other objects, features and advantages of the disclosure will become apparent from the following detailed description of illustrative embodiments thereof, which are to be read in connection with the accompanying drawings.

### Brief Description of the Drawings

FIG. 1 is a block diagram showing a communication system according to an embodiment of the disclosure;
FIG. 2 is a flowchart illustrating a process according to an embodiment of the disclosure;
FIG. 3 is a flowchart illustrating a method at a network management device according to an embodiment of the disclosure;
FIG. 4 is a flowchart for explaining the method shown in FIG. 3;
FIG. 5 is a flowchart illustrating a method at a centralized authorization server according to an embodiment of the disclosure;
FIG. 6 is a flowchart illustrating a method at a terminal device according to an embodiment of the disclosure;
FIG. 7 is a block diagram showing an apparatus suitable for use in practicing some embodiments of the disclosure; and
FIG. 8 is a block diagram showing a communication system suitable for use in practicing some embodiments of the disclosure.

### Detailed Description

For the purpose of explanation, details are set forth in the following description in order to provide a thorough understanding of the embodiments disclosed. It is apparent, however, to those skilled in the art that the embodiments may be implemented without these specific details or with an equivalent arrangement.

As used herein, the term "wireless communication network" refers to a network following any suitable communication standards, such as LTE-Advanced (LTE-A), LTE, Wideband Code Division Multiple Access (WCDMA), High-Speed Packet Access (HSPA), and so on. Furthermore, the communications between a terminal device and a network device in the wireless communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future.

The term "network device" refers to a device in a wireless communication network via which a terminal device accesses the network and receives services therefrom. The network device refers a base station (BS), an access point (AP), a Mobile Management Entity (MME), Multi-cell/Multicast Coordination Entity (MCE), a gateway, a server, a controller or any other suitable device in the wireless communication network. The BS may be, for example, a node B (NodeB or NB), an evolved NodeB (eNodeB or eNB), a gNB, a Remote Radio Unit (RRU), a radio header (RH), a remote radio head (RRH), a relay, a low power node such as a femto, a pico, and so forth.

Yet further examples of network device include multi-standard radio (MSR) radio equipment such as MSR BSs, network controllers such as radio network controllers (RNCs) or base station controllers (BSCs), base transceiver stations (BTSs), transmission points, transmission nodes, Multi-cell/multicast Coordination Entities (MCEs), core network nodes (e.g., MSCs, MMEs), O&M nodes, OSS nodes, SON nodes, positioning nodes (e.g., E-SMLCs), and/or MDTs. More generally, however, network device may represent any suitable device (or group of devices) capable, configured, arranged, and/or operable to enable and/or provide a terminal device access to the wireless communication network or to provide some service to a terminal device that has accessed the wireless communication network.

The term "terminal device" refers to any end device that can access a wireless communication network and receive services therefrom. By way of example and not limitation, the terminal device refers to a mobile terminal, UE, or other suitable device. The UE may be, for example, a Subscriber Station (SS), a Portable Subscriber Station, a Mobile Station (MS), or an Access Terminal (AT). The terminal device may include, but not limited to, portable computers, image capture terminal devices such as digital cameras, gaming terminal devices, music storage and playback appliances, a mobile phone, a cellular phone, a smart phone, a tablet, a wearable device, a personal digital assistant (PDA), a vehicle, and the like.

The terminal device may support device-to-device (D2D) communication, for example by implementing a 3GPP standard for sidelink communication, and may in this case be referred to as a D2D communication device.

As yet another specific example, in an Internet of Things (IOT) scenario, a terminal device may represent a machine or other device that performs monitoring and/or measurements, and transmits the results of such monitoring and/or measurements to another terminal device and/or a network equipment. The terminal device may in this case be a machine-to-machine (M2M) device, which may in a 3GPP context be referred to as a machine-type communication (MTC) device. As one particular example, the terminal device may be a UE implementing the 3GPP narrow band internet of things (NB-IoT) standard. Particular examples of such machines or devices are sensors, metering devices such as power meters, industrial machinery, or home or personal appliances, e.g. refrigerators, televisions, personal wearables such as watches etc. In other scenarios, a terminal device may represent a vehicle or other equipment that is capable of monitoring and/or reporting on its operational status or other functions associated with its operation.

In the above existing authorization solution as defined in RFC 6536, only local authorization is defined, which means there is no way to do centralized authorization for NETCONF. As a result, in the cloud/SDN environment such as the Internet of things (IoT), mobile user cannot have the integrated authorization configuration when logging in from different network access points if each user's authorization information has not been configured in every network access point. This may remarkably slow down the network provisioning performance especially in the provisioning of massive devices with large individual authorization configurations.

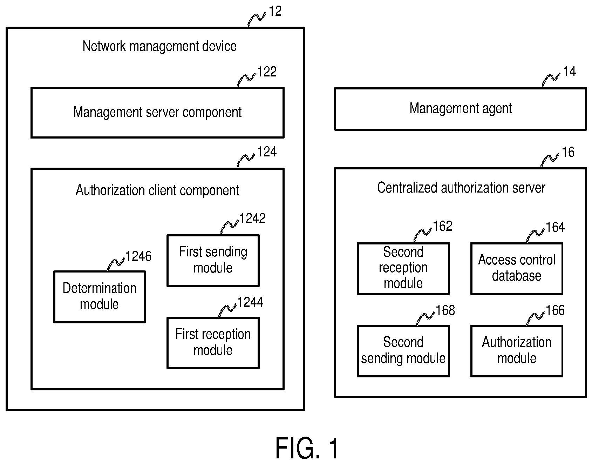

The present disclosure proposes a centralized authorization solution for NETCONF. Hereinafter, the solution will be described in detail with reference to FIGs. 1-8.

FIG. 1 is a block diagram showing a communication system according to an embodiment of the disclosure. The communication system may be part of a cloud/SDN environment such as the Internet of things (IoT). As shown, the communication system comprises a network management device 12, a management agent 14 and a centralized authorization server 16. The network management device 12 comprises a management server component 122 and an authorization client component 124. The management server component 122 is configured, with NETCONF protocol, to process a user operation request from the management agent 14 based at least on authorization information from the authorization client component 124. Correspondingly, the management agent 14 is configured, with NETCONF protocol, to send the user operation request to and receive the operation result from the management server component 122.

The authorization client component 124 is configured, with a remote authorization protocol, to obtain, for the user operation request, the authorization information from the centralized authorization server 16. Correspondingly, the centralized authorization server 16 is configured, with the same remote authorization protocol, to generate an authorization response for the authorization client component 124. As an example, the remote authorization protocol may be terminal access controller access-control system plus (TACACS+) protocol, which can provide an extensible architecture of doing authorization. Alternatively, any other suitable remote authorization protocols such as remote authentication dial in user service (RADIUS) protocol may be employed.

In this way, the above solution can provide a way to do NETCONF centralized authorization. In turn, it can provide the possibility of doing centralized access-right control for a group of network management devices within the control of this solution. As an exemplary example, in the IoT case, the network management device 12 may be a gateway for access to a home network. The management agent 14 may be embedded in a terminal device or may be a terminal device itself, such as a mobile phone, a pad computer, a laptop computer, a desktop computer, or any other devices (e.g., a vehicle) with wired and/or wireless communication capability. The centralized authorization server 16 may be a remote server serving a plurality of the gateways located at different positions. This can easily provide the integrated authorization information without requiring the gateways in different positions to have the same authorization configuration. As another exemplary example, the network management device 12 may be a gateway for access to the Internet of vehicles (IoV). The management agent 14 may be embedded in a vehicle or may be a vehicle itself. The centralized authorization server 16 may be a remote server serving a plurality of the gateways located at different positions. In this case, the authorization response may be generated for a vehicle according to the vehicle's location.

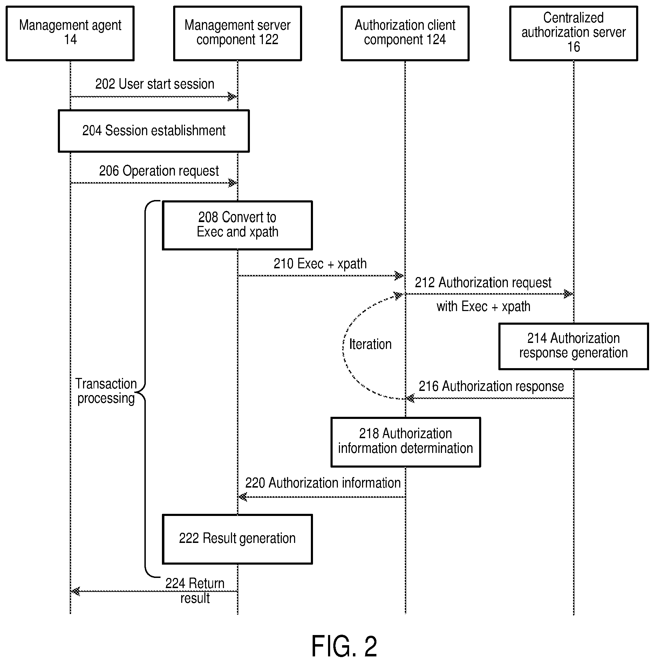

As shown, the authorization client component 124 may comprise a first sending module 1242, a first reception module 1244 and a determination module 1246. The centralized authorization server 16 may comprise a second reception module 162, an access control database 164, an authorization module 166 and a second sending module 168. The implementing details of the above constituent parts of the communication system will be described in detail with reference to FIG. 2.

FIG. 2 is a flowchart illustrating a process according to an embodiment of the disclosure. Although the process is described in the context of the IoT, those skilled in the art will understand that the principle of the present disclosure may also be applied to any other scenarios in which centralized authorization is needed for NETCONF.

At block 202, a user starts a session via the management agent 14. As described above, the management agent 14 is a NETCONF agent which may be embedded in a terminal device. The user may operate the terminal device to trigger the start of the session. The session may be a secure shell (SSH) session. It may be started by sending an initial transmission control protocol (TCP) connection request from the management agent 14 to the management server component 122.

At block 204, the session is established between the management agent 14 and the management server component 122. Specifically, in response to the initial TCP connection request, the management server component 122 may negotiate the SSH protocol version and exchange keys for message integrity and encryption with the management agent 14. Then, the management agent 14 may send an authentication request to the management server component 122. Various authentication protocols such as RADIUS protocol may be used to authenticate the user. Once the user has been successfully authenticated, the management agent 14 may send a session request to the management server component 122 such that the SSH session is established.

At block 206, the user sends an operation request to the management server component 122 via the management agent 14. The operation request may be sent via remote procedure call (RPC). The operation request is expressed in extensible markup language (XML) and may indicate one or more operations.

In response to the operation request, transaction processing is started. Specifically, at block 208, the management server component 122 converts the operation request to an operation identification and an Xpath. This may be achieved by a conversion from XML to Xpath. The operation identification may be the name of an executive program for performing an operation, such as "get-config", "edit-config" or the like as defined in NETCONF. The Xpath may represent an object on which the operation is to be performed. Since there may be one or more operations indicated in the operation request, one or more pairs of operation identifications and Xpaths may be obtained.

At block 210, the management server component 122 passes the one or more pairs of operation identifications and Xpaths to the authorization client component 124. At block 212, the authorization client component 124 (specifically, the first sending module 1242) sends to the centralized authorization server 16 (specifically, the second reception module 162) an authorization request including the one or more pairs of operation identifications and Xpaths. The authorization request further comprises an identification of the user, such as user name, group name or the like, which may be determined during the authentication performed at block 204. For example, each pair of operation identification and Xpath may be set as two arguments in the Authorization_REQUEST message in the case where TACACS+ protocol is used.

In response to the authorization request, the centralized authorization server 16 (specifically, the authorization module 166 together with the access control database 164) generates one or more authorization responses at block 214. The access control database 164 is configured to store information about identifications and access rights of a plurality of users. The information about an access right of a user may include: an operation identification; an Xpath representing an object on which the operation is to be performed; and access control information for determining whether the user is permitted to perform the operation. The access control information may include an access control rule for specifying whether a user name or a group name has an access right for particular operation(s).

As an exemplary example, a model for the access control database 164 may be represented as follows:

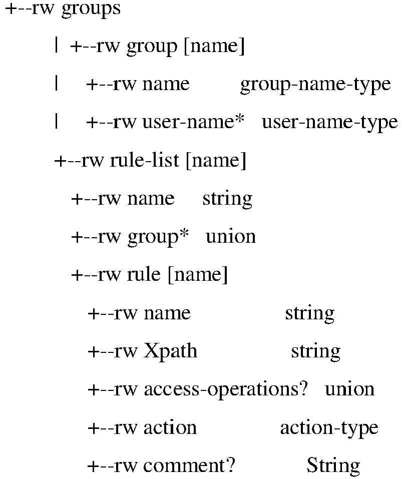

In the IoT case such as home-appliance access control scenario, the above model may be specifically represented as follows:

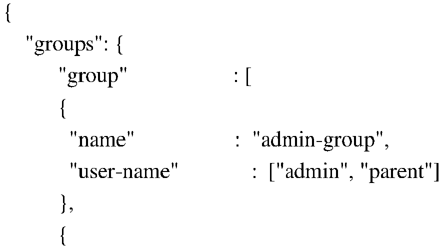

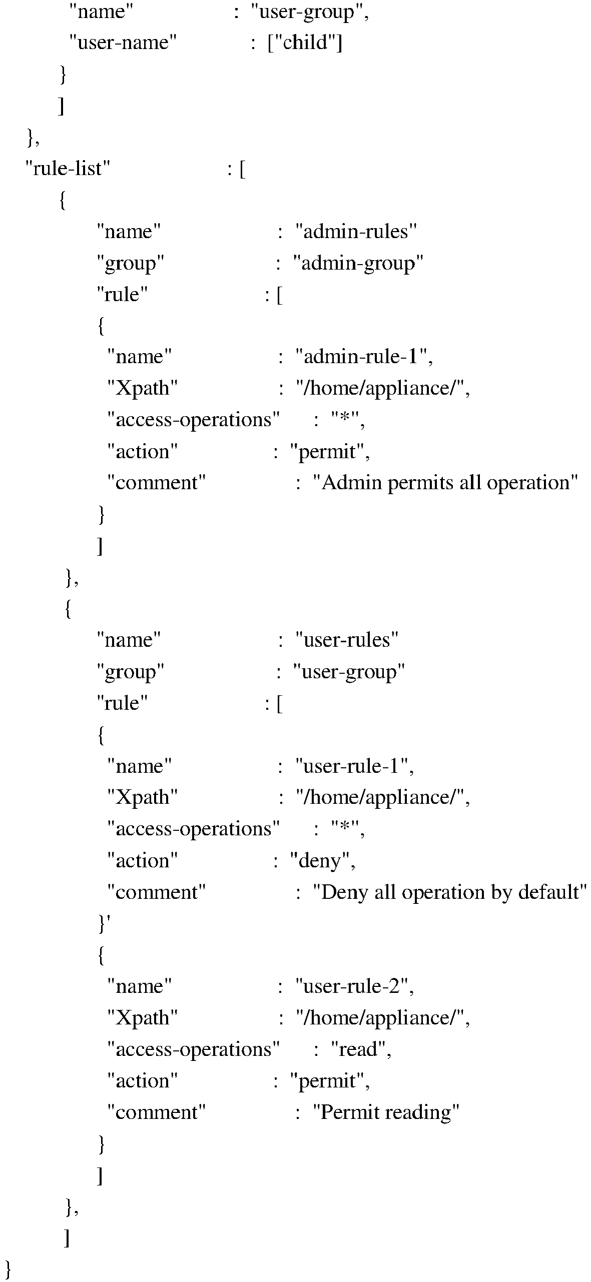

The authorization module 166 is configured to generate an authorization response for the authorization request based on the access control database 164. For example, the corresponding access control rule(s) may be located from the access control database 164 according to the user identification and be processed to determine the authorization response. In the above instance of home-appliance access control, if the user name is "child" and the requested operation is "read"+"/home/appliance/", then the rule "user-rule-2" may be located and processed such that the authorization response is determined as success.

It should be noted that the present disclosure is not limited to the above examples. Any features related to the access control as defined in NETCONF protocols such as RFC6536 may be employed in the access control database 164 and the authorization module 166. In this way, new authorization attributes containing, for example, the NETCONF Xpath and the corresponding access-right are introduced into the remote authorization protocol between the authorization client component 124 and the centralized authorization server 16.

At block 216, the centralized authorization server 16 (specifically, the second sending module 168) sends the generated authorization response to the authorization client component 124 (specifically, the first reception module 1244). For example, the authorization response may be set into the status field of the Authorization_RESPONSE message in the case where TACACS+ protocol is used. Note that in the case where multiple operations are indicated in the operation request, blocks 212, 214 and 216 may be performed iteratively for each of the multiple operations.

At block 218, the authorization client component 124 (specifically, the determination module 1246) determines the authorization information based on the one or more authorization responses. For example, in the case where multiple operations are indicated in the operation request, the authorization information may be determined as failure if the authorization response for any operation indicates failure, and may be determined as success if the authorization responses for all the operations indicate success. At block 220, the authorization client component 124 (specifically, the determination module 1246) passes the authorization information to the management server component 122.

At block 222, the management server component 122 generates the operation result according to the authorization information. If the authorization information indicates failure, the result may be generated to indicate failure. On the other hand, if the authorization information indicates success, the executive program(s) may be run by means of a YANG base database to perform the one or more operations. At block 224, the result is returned from the management server component 122 to the management agent 14.

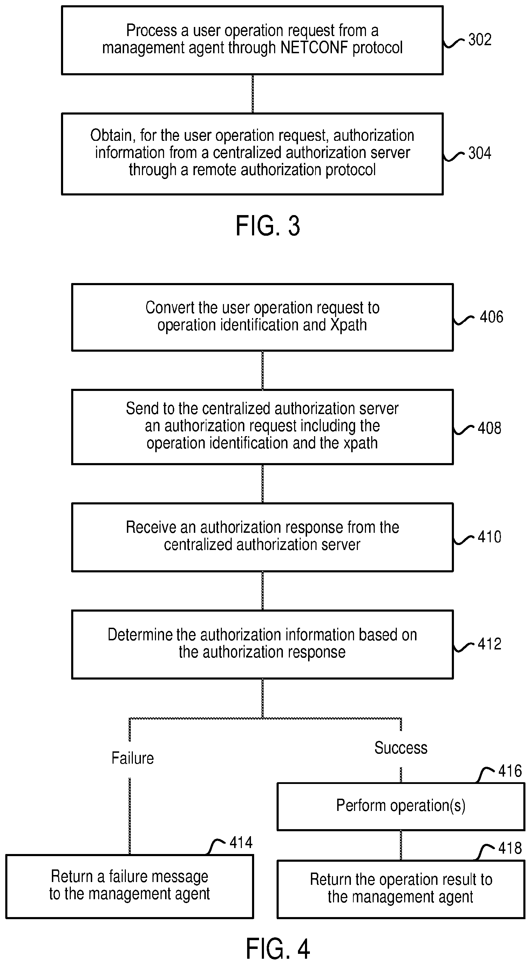

FIG. 3 is a flowchart illustrating a method at a network management device according to an embodiment of the disclosure. At block 302, the network management device processes a user operation request from a management agent through NETCONF protocol. At block 304, the network management device obtains, for the user operation request, authorization information from a centralized authorization server through a remote authorization protocol. The processing of the user operation request at block 302 is based at least on the authorization information.

FIG. 4 is a flowchart for explaining the method shown in FIG. 3. For example, block 302 may be implemented as blocks 406 and 412-418 shown in FIG. 4. Block 304 may be implemented as blocks 408 and 410 shown in FIG. 4. At block 406, the user operation request is converted to an operation identification and an Xpath. The Xpath represents an object on which the operation is to be performed. Block 406 may correspond to block 208 shown in FIG. 2.

At block 408, an authorization request including the operation identification and the Xpath is sent to the centralized authorization server. Block 408 may correspond to block 212 shown in FIG. 2. At block 410, an authorization response is received from the centralized authorization server. Block 410 may correspond to block 216 shown in FIG. 2.

At block 412, the authorization information is determined based on the authorization response. Block 412 may correspond to block 218 shown in FIG. 2. At block 414, a failure message is returned to the management agent when the authorization information indicates failure. On the other hand, at block 416, operation(s) are performed according to the user operation request when the authorization information indicates success. At block 418, the operation result is returned to the management agent. Blocks 414-418 may correspond to blocks 222 and 224 shown in FIG. 2.

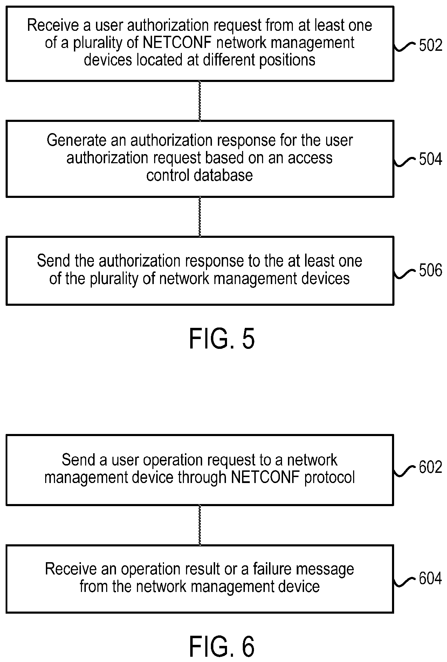

FIG. 5 is a flowchart illustrating a method at a centralized authorization server according to an embodiment of the disclosure. The centralized authorization server is configured with a remote authorization protocol. At block 502, a user authorization request is received from at least one of a plurality of network management devices configured with NETCONF protocol and located at different positions. Block 502 may correspond to block 212 shown in FIG. 2.

At block 504, an authorization response is generated for the user authorization request based on an access control database. The access control database is configured to store information about identifications and access rights of a plurality of users. Block 504 may correspond to block 214 shown in FIG. 2. At block 506, the authorization response is sent to the at least one of the plurality of network management devices. Block 506 may correspond to block 216 shown in FIG. 2. It should be noted that two steps shown in succession may, in fact, be executed substantially concurrently, or the steps may sometimes be executed in the reverse order, depending upon the functionality involved.

FIG. 6 is a flowchart illustrating a method at a terminal device in a communication system according to an embodiment of the disclosure. The communication system further comprises a network management device and a centralized authorization server, as shown in FIG. 2. At block 602, a user operation request is sent to the network management device through NETCONF protocol. Block 602 may correspond to block 206 shown in FIG. 2. As described above, the network management device is configured to process the user operation request through NETCONF protocol, and to obtain, for the user operation request, authorization information from the centralized authorization server through a remote authorization protocol. Processing the user operation request is based at least on the authorization information such that an operation result or a failure message is generated. At block 604, the operation result or the failure message is received from the network management device. Block 604 may correspond to block 224 shown in FIG. 2.

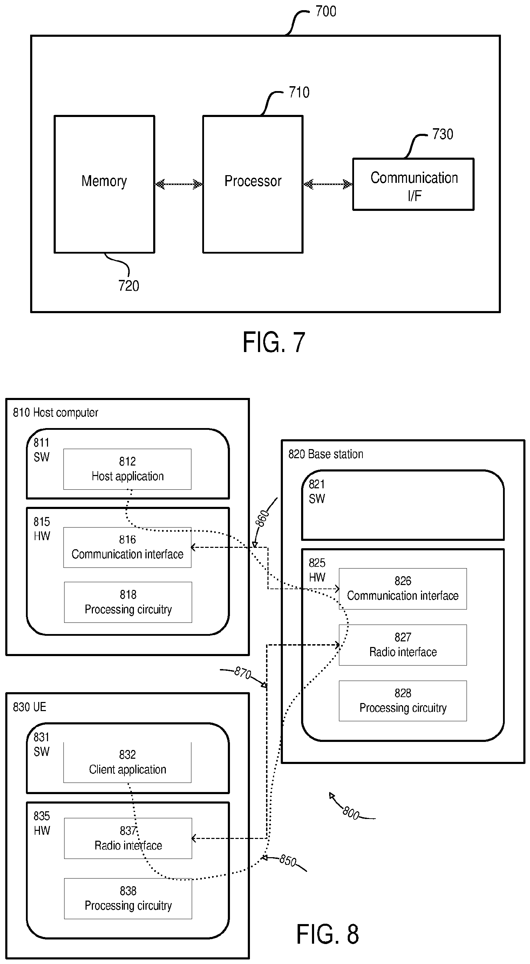

FIG. 7 is a block diagram showing an apparatus suitable for use in practicing some embodiments of the disclosure. For example, any one of the terminal device (embedded with the management agent 14), the network management device 12 and the centralized authorization server 16 may be implemented through the apparatus 700. As shown, the apparatus 700 may include a processor 710, a memory 720 that stores a program, and a communication interface 730 for communicating data with other external devices through wired and/or wireless communication.

The program is assumed to include program instructions that, when executed by the processor 710, enable the apparatus 700 to operate in accordance with the embodiments of the present disclosure, as discussed above. That is, the embodiments of the present disclosure may be implemented at least in part by computer software executable by the processor 710, or by hardware, or by a combination of software and hardware.

The memory 720 may be of any type suitable to the local technical environment and may be implemented using any suitable data storage technology, such as semiconductor based memory devices, flash memory, magnetic memory devices and systems, optical memory devices and systems, fixed memory and removable memory. The processor 710 may be of any type suitable to the local technical environment, and may include one or more of general purpose computers, special purpose computers, microprocessors, digital signal processors (DSPs) and processors based on multi-core processor architectures, as non-limiting examples.

FIG. 8 is a block diagram showing a communication system suitable for use in practicing some embodiments of the disclosure. In this example, the terminal device is implemented as a user equipment (UE) which can communicate, via at least a cellular base station, with the network management device which is implemented as a host computer. Similar to the network management device, the centralized authorization server may also be implemented as a host computer. Note that the centralized authorization server is omitted in communication system 800 of FIG. 8 for brevity.

In other words, the present disclosure provides a communication system which comprises a UE, a base station, a first host computer and a second host computer. The first host computer includes a first processing circuitry and a first communication interface which are configured to act as the network management device. The second host computer includes a second processing circuitry and a second communication interface which are configured to act as the centralized authorization server. The first communication interface is configured to communicate with a cellular network. The cellular network comprises the base station having a radio interface and a third processing circuitry. The third processing circuitry is configured to transfer a user operation request from the UE to the first host computer and transfer an operation result or a failure message from the first host computer to the UE.

Specifically, in communication system 800, host computer 810 comprises hardware 815 including communication interface 816 configured to set up and maintain a wired or wireless connection with an interface of a different communication device of communication system 800. Host computer 810 further comprises processing circuitry 818, which may have storage and/or processing capabilities. In particular, processing circuitry 818 may comprise one or more programmable processors, application-specific integrated circuits, field programmable gate arrays or combinations of these (not shown) adapted to execute instructions. Host computer 810 further comprises software 811, which is stored in or accessible by host computer 810 and executable by processing circuitry 818. Software 811 includes host application 812. Host application 812 may be operable to provide a service to a remote user, such as UE 830 connecting via connection 850 terminating at UE 830 and host computer 810. In providing the service to the remote user, host application 812 may provide user data which is transmitted using connection 850.

Communication system 800 further includes base station 820 provided in a telecommunication system and comprising hardware 825 enabling it to communicate with host computer 810 and with UE 830. Hardware 825 may include communication interface 826 for setting up and maintaining a wired or wireless connection with an interface of a different communication device of communication system 800, as well as radio interface 827 for setting up and maintaining at least wireless connection 870 with UE 830 located in a coverage area (not shown in Figure 8) served by base station 820. Communication interface 826 may be configured to facilitate connection 860 to host computer 810. Connection 860 may be direct or it may pass through a core network (not shown in Figure 8) of the telecommunication system and/or through one or more intermediate networks outside the telecommunication system. In the embodiment shown, hardware 825 of base station 820 further includes processing circuitry 828, which may comprise one or more programmable processors, application-specific integrated circuits, field programmable gate arrays or combinations of these (not shown) adapted to execute instructions. Base station 820 further has software 821 stored internally or accessible via an external connection.

Communication system 800 further includes UE 830 already referred to. Its hardware 835 may include radio interface 837 configured to set up and maintain wireless connection 870 with a base station serving a coverage area in which UE 830 is currently located. Hardware 835 of UE 830 further includes processing circuitry 838, which may comprise one or more programmable processors, application-specific integrated circuits, field programmable gate arrays or combinations of these (not shown) adapted to execute instructions. UE 830 further comprises software 831, which is stored in or accessible by UE 830 and executable by processing circuitry 838. Software 831 includes client application 832. Client application 832 may be operable to provide a service to a human or non-human user via UE 830, with the support of host computer 810. In host computer 810, an executing host application 812 may communicate with the executing client application 832 via connection 850 terminating at UE 830 and host computer 810. In providing the service to the user, client application 832 may receive request data from host application 812 and provide user data in response to the request data. Connection 850 may transfer both the request data and the user data. Client application 832 may interact with the user to generate the user data that it provides.

In FIG. 8, connection 850 has been drawn abstractly to illustrate the communication between host computer 810 and UE 830 via base station 820, without explicit reference to any intermediary devices and the precise routing of messages via these devices. Network infrastructure may determine the routing, which it may be configured to hide from UE 830 or from the service provider operating host computer 810, or both. While connection 850 is active, the network infrastructure may further take decisions by which it dynamically changes the routing (e.g., on the basis of load balancing consideration or reconfiguration of the network).

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the disclosure is not limited thereto. While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the disclosure may be practiced in various components such as integrated circuit chips and modules. It should thus be appreciated that the exemplary embodiments of this disclosure may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the exemplary embodiments of this disclosure.

It should be appreciated that at least some aspects of the exemplary embodiments of the disclosure may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by one of skill in the art, the function of the program modules may be combined or distributed as desired in various embodiments. In addition, the function may be embodied in whole or in part in firmware or hardware equivalents such as integrated circuits, field programmable gate arrays (FPGA), and the like.

References in the present disclosure to "one embodiment", "an embodiment" and so on, indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

It should be understood that, although the terms "first", "second" and so on may be used herein to describe various elements, these elements should not be limited by these terms. These terms are only used to distinguish one element from another. For example, a first element could be termed a second element, and similarly, a second element could be termed a first element, without departing from the scope of the disclosure. As used herein, the term "and/or" includes any and all combinations of one or more of the associated listed terms.

The terminology used herein is for the purpose of describing particular embodiments only and is not intended to limit the present disclosure. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components, but do not preclude the presence or addition of one or more other features, elements, components and/ or combinations thereof. The terms "connect", "connects", "connecting" and/or "connected" used herein cover the direct and/or indirect connection between two elements.

## Claims

1. A network management device (12) comprising:
a management server component (122) configured with network configuration NETCONF, protocol; and
an authorization client component (124) configured with a remote authorization protocol; wherein
the management server component (122) is configured to:
receive a user operation request from a management agent (14), wherein the operation request indicates one or more operations;
convert the operation request to one or more pairs of operation identifications and Xpaths, wherein the Xpath represents an object on which the operation is to be performed; and
send the one or more pairs of operation identifications and Xpaths to the authorization client component (124); and
the authorization client component (124) is configured to:
send an authorization request including the one or more pairs of operation identifications and Xpaths to a centralized authorization server (16);
obtain, for the user operation request, an authorization information from the centralized authorization server (16);
send the authorization information to the management server component (122); and
the management server component (122) is further configured to:
generate an operation result according to the authorization information; and
send the operation result to the management agent (14).

2. The network management device (12) according to claim 1, wherein the remote authorization protocol is terminal access controller access-control system plus TACACS+, protocol or remote authentication dial in user service, RADIUS, protocol.

3. The network management device (12) according to claim 1 or 2, wherein the authorization client component (124) comprises:
a first sending module (1242) configured to send to the centralized authorization server (16) the authorization request;
a first reception module (1244) configured to receive an authorization response from the centralized authorization server (16); and
a determination module (1246) configured to determine the authorization information based on the authorization response.

4. The network management device (12) according to claim 3,
wherein the first sending module (1242) and the first reception module (1244) operate iteratively for each of the multiple operations; and
wherein the determination module (1246) is configured to determine the authorization information as failure when the authorization response for any operation indicates failure, and to determine the authorization information as success when the authorization responses for the multiple operations indicate success.

5. The network management device (12) according to any of claims 1 to 4, wherein the management server component (122) is configured to return a failure message to the management agent (14) when the authorization information indicates failure, and to perform operation(s) according to the user operation request and return the operation result to the management agent (14) when the authorization information indicates success;
and/or
wherein the network management device (12) is used in one of a cloud environment, a software defined network SDN, environment, and the Internet of things , IoT.

6. A method at a network management device, the method comprising:
receiving (302) a user operation request from a management agent through network configuration, NETCONF, protocol, wherein the operation request indicates one or more operations;
converting the operation request to one or more pairs of operation identifications and Xpaths, wherein the Xpath represents an object on which the operation is to be performed;
sending an authorization request including the one or more pairs of operation identifications and Xpaths to a centralized authorization server (16);
obtaining (304), for the user operation request, authorization information from the centralized authorization server through a remote authorization protocol;
generating an operation result according to the authorization information; and
sending the operation result to the management agent.

7. The method according to claim 6,
wherein obtaining (304) the authorization information comprises:
receiving (410) an authorization response from the centralized authorization server; and
determining (412) the authorization information based on the authorization response;
and, optionally:
wherein there are multiple operations indicated in the user operation request;
wherein the sending (408) of the authorization request and the receiving (410) of the authorization response are performed iteratively for each of the multiple operations; and
wherein determining (412) the authorization information comprises:
determining the authorization information as failure when the authorization response for any operation indicates failure; and
determining the authorization information as success when the authorization responses for the multiple operations indicate success.

8. The method according to any of claims 6 to 7, wherein sending the operation result to the management agent comprises:
returning (414) a failure message to the management agent when the authorization information indicates failure;
performing (416) operation(s) according to the user operation request when the authorization information indicates success; and
returning (418) the operation result to the management agent.

## Patentansprüche

1. Netzwerkverwaltungsvorrichtung (12) umfassend:
eine Verwaltungsserverkomponente (122), die mit einem Netzwerkkonfigurations-,NETCONF-,Protokoll konfiguriert ist;
eine Autorisierungsclientkomponente (124), die mit einem Remoteautorisierungsprotokoll konfiguriert ist; wobei
die Verwaltungsserverkomponente (122) konfiguriert ist zum:
Empfangen einer Benutzeroperationsanforderung von einem Verwaltungsagenten (14), wobei die Operationsanforderung eine oder mehrere Operationen angibt;
Konvertieren der Operationsanforderung in ein oder mehrere Paare von Operationsidentifikationen und Xpaths, wobei der Xpath ein Objekt darstellt, an welchem die Operation durchgeführt werden soll; und
Senden des einen oder der mehreren Paare von Operationsidentifikationen und Xpaths an die Autorisierungsclientkomponente (124); und
die Autorisierungsclientkomponente (124) konfiguriert ist zum:
Senden einer Autorisierungsanforderung, die das eine oder die mehreren Paare von Operationsidentifikationen und Xpaths umfasst, an einen zentralen Autorisierungsserver (16);
Erhalten einer Autorisierungsinformation vom zentralen Autorisierungsserver (16) für die Benutzeroperationsanforderung;
Senden der Autorisierungsinformation an die Verwaltungsserverkomponente (122); und
die Verwaltungsserverkomponente (122) konfiguriert ist zum:
Erzeugen eines Operationsergebnisses gemäß der Autorisierungsinformation; und
Senden des Operationsergebnisses an den Verwaltungsagenten (14).

2. Netzwerkverwaltungsvorrichtung (12) nach Anspruch 1, wobei das Remoteautorisierungsprotokoll ein Protokoll für Endgerätezugriffssteuerungs-Zugriffssteuerungssysteme, TACACS+, oder ein Protokoll des Remoteauthentifizierungsdiensts für sich einwählende Benutzer, RADIUS, ist.

3. Netzwerkverwaltungsvorrichtung (12) nach Anspruch 1 oder 2, wobei die Autorisierungsclientkomponente (124) umfasst:
ein erstes Sendemodul (1242), das zum Senden der Autorisierungsanforderung an den zentralen Autorisierungsserver (16) konfiguriert ist;
ein erstes Empfangsmodul (1244), das zum Empfangen einer Autorisierungsantwort vom zentralen Autorisierungsserver (16) konfiguriert ist; und
ein Bestimmungsmodul (1246), das zum Bestimmen der Autorisierungsinformation basierend auf der Autorisierungsantwort konfiguriert ist.

4. Netzwerkverwaltungsvorrichtung (12) nach Anspruch 3,
wobei das erste Sendemodul (1242) und das erste Empfangsmodul (1244) für jede der mehreren Operationen iterativ arbeiten; und
wobei das Bestimmungsmodul (1246) so konfiguriert ist, dass es die Autorisierungsinformation als Fehler bestimmt, wenn die Autorisierungsantwort für eine Operation Fehler angibt, und die Autorisierungsinformation als Erfolg bestimmt, wenn die Autorisierungsantworten für die mehreren Operationen Erfolg angeben.

5. Netzwerkverwaltungsvorrichtung (12) nach einem der Ansprüche 1 bis 4, wobei die Verwaltungsserverkomponente (122) so konfiguriert ist, dass sie eine Fehlernachricht an den Verwaltungsagenten (14) zurücksendet, wenn die Autorisierungsinformation Fehler angibt, und Operation(en) gemäß der Benutzeroperationsanforderung durchführt und das Operationsergebnis an den Verwaltungsagenten (14) zurücksendet, wenn die Autorisierungsinformation Erfolg angibt;
und/oder
wobei die Netzwerkverwaltungsvorrichtung (12) in einem von einer Cloud-Umgebung, einer Umgebung eines softwaredefinierten Netzwerks, SDN, und dem Internet der Dinge, IoT, verwendet wird.

6. Verfahren an einer Netzwerkverwaltungsvorrichtung, wobei das Verfahren umfasst:
Empfangen (302) einer Benutzeroperationsanforderung von einem Verwaltungsagenten mittels eines Netzwerkkonfigurations-,NETCONF-,Protokolls, wobei die Operationsanforderung eine oder mehrere Operationen angibt;
Konvertieren der Operationsanforderung in ein oder mehrere Paare von Operationsidentifikationen und Xpaths, wobei der Xpath ein Objekt darstellt, an welchem die Operation durchgeführt werden soll;
Senden einer Autorisierungsanforderung, die das eine oder die mehreren Paare von Operationsidentifikationen und Xpaths umfasst, an einen zentralen Autorisierungsserver (16);
Erhalten (304) von Autorisierungsinformationen vom zentralen Autorisierungsserver für die Benutzeroperationsanforderung mittels eines Remoteautorisierungsprotokolls;
Erzeugen eines Operationsergebnisses gemäß den Autorisierungsinformationen; und
Senden des Operationsergebnisses an den Verwaltungsagenten.

7. Verfahren nach Anspruch 6,
wobei das Erhalten (304) der Autorisierungsinformationen umfasst:
Empfangen (410) einer Autorisierungsantwort vom zentralen Autorisierungsserver; und
Bestimmen (412) der Autorisierungsinformationen basierend auf der Autorisierungsantwort;
und optional:
wobei es mehrere Operationen gibt, die in der Benutzeroperationsanforderung angegeben sind;
wobei das Senden (408) der Autorisierungsanforderung und das Empfangen (410) der Autorisierungsantwort für jede der mehreren Operationen iterativ durchgeführt werden; und
wobei das Bestimmen (412) der Autorisierungsinformationen umfasst:
Bestimmen der Autorisierungsinformationen als Fehler, wenn die Autorisierungsantwort für eine Operation Fehler angibt; und
Bestimmen der Autorisierungsinformationen als Erfolg, wenn die Autorisierungsantworten für die mehreren Operationen Erfolg angeben.

8. Verfahren nach einem der Ansprüche 6 bis 7, wobei das Senden des Operationsergebnisses an den Verwaltungsagenten umfasst:
Zurücksenden (414) einer Fehlernachricht an den Verwaltungsagenten, wenn die Autorisierungsinformationen Fehler angeben, und
Durchführen (416) von Operation(en) gemäß der Benutzeroperationsanforderung, wenn die Autorisierungsinformationen Erfolg angeben; und Zurücksenden (418) des Operationsergebnisses an den Verwaltungsagenten.

## Revendications

1. Dispositif de gestion de réseau (12) comprenant :
un composant serveur de gestion (122) configuré avec un protocole de configuration de réseau, NETCONF ; et
un composant client d'autorisation (124) configuré avec un protocole d'autorisation distante ; dans lequel
le composant serveur de gestion (122) est configuré pour :
recevoir une demande d'opération d'utilisateur depuis un agent de gestion (14), dans lequel la demande d'opération indique une ou plusieurs opérations ;
convertir la demande d'opération en une ou plusieurs paires d'identifications d'opération et de Xpaths, dans lequel le Xpath représente un objet sur lequel l'opération doit être réalisée ; et
envoyer les une ou plusieurs paires d'identifications d'opération et de Xpaths au composant client d'autorisation (124) ; et
le composant client d'autorisation (124) est configuré pour :
envoyer une demande d'autorisation incluant les une ou plusieurs paires d'identifications d'opération et de Xpaths à un serveur d'autorisation centralisé (16) ;
obtenir, pour la demande d'opération d'utilisateur, une information d'autorisation depuis le serveur d'autorisation centralisé (16) ;
envoyer l'information d'autorisation au composant serveur de gestion (122) ; et
le composant serveur de gestion (122) est en outre configuré pour :
générer un résultat d'opération en fonction de l'information d'autorisation ; et
envoyer le résultat d'opération à l'agent de gestion (14) .

2. Dispositif de gestion de réseau (12) selon la revendication 1, dans lequel le protocole d'autorisation distante est un protocole de système de contrôle d'accès de contrôleur d'accès au terminal plus, TACACS+, ou un protocole de service d'authentification distante d'utilisateur appelant, RADIUS.

3. Dispositif de gestion de réseau (12) selon la revendication 1 ou 2, dans lequel le composant client d'autorisation (124) comprend :
un premier module d'envoi (1242) configuré pour envoyer la demande d'autorisation au serveur d'autorisation centralisé (16) ;
un premier module de réception (1244) configuré pour recevoir une réponse d'autorisation depuis le serveur d'autorisation centralisé (16) ; et
un module de détermination (1246) configuré pour déterminer l'information d'autorisation sur la base de la réponse d'autorisation.

4. Dispositif de gestion de réseau (12) selon la revendication 3,
dans lequel le premier module d'envoi (1242) et le premier module de réception (1244) fonctionnent itérativement pour chacune des multiples opérations ; et
dans lequel le module de détermination (1246) est configuré pour déterminer l'information d'autorisation en tant qu'échec lorsque la réponse d'autorisation pour toute opération indique un échec, et pour déterminer l'information d'autorisation en tant que réussite lorsque les réponses d'autorisation pour les multiples opérations indiquent une réussite.

5. Dispositif de gestion de réseau (12) selon l'une quelconque des revendications 1 à 4, dans lequel le composant serveur de gestion (122) est configuré pour retourner un message d'échec à l'agent de gestion (14) lorsque l'information d'autorisation indique un échec, et pour réaliser une ou plusieurs opérations en fonction de la demande d'opération d'utilisateur et retourner le résultat d'opération à l'agent de gestion (14) lorsque l'information d'autorisation indique une réussite ;
et/ou
dans lequel le dispositif de gestion de réseau (12) est utilisé dans l'un parmi un environnement cloud, un environnement de réseau défini par logiciel, SDN, et l'Internet des objets, IoT.

6. Procédé au niveau d'un dispositif de gestion de réseau, le procédé comprenant :
la réception (302) d'une demande d'opération d'utilisateur depuis un agent de gestion par l'intermédiaire d'un protocole de configuration de réseau, NETCONF, dans lequel la demande d'opération indique une ou plusieurs opérations ;
la conversion de la demande d'opération en une ou plusieurs paires d'identifications d'opération et de Xpaths, dans lequel le Xpath représente un objet sur lequel l'opération doit être réalisée ;
l'envoi d'une demande d'autorisation incluant les une ou plusieurs paires d'identifications d'opération et de Xpaths à un serveur d'autorisation centralisé (16) ;
l'obtention (304), pour la demande d'opération d'utilisateur, d'une information d'autorisation depuis le serveur d'autorisation centralisé par l'intermédiaire d'un protocole d'autorisation distante ;
la génération d'un résultat d'opération en fonction de l'information d'autorisation ; et
l'envoi du résultat d'opération à l'agent de gestion.

7. Procédé selon la revendication 6,
dans lequel l'obtention (304) de l'information d'autorisation comprend :
la réception (410) d'une réponse d'autorisation depuis le serveur d'autorisation centralisé ; et
la détermination (412) de l'information d'autorisation sur la base de la réponse d'autorisation ;
et facultativement :
dans lequel il y a de multiples opérations indiquées dans la demande d'opération d'utilisateur ;
dans lequel l'envoi (408) de la demande d'autorisation et la réception (410) de la réponse d'autorisation sont réalisés itérativement pour chacune des multiples opérations ; et
dans lequel la détermination (412) de l'information d'autorisation comprend :
la détermination de l'information d'autorisation en tant qu'échec lorsque la réponse d'autorisation pour toute opération indique un échec ; et
la détermination de l'information d'autorisation en tant que réussite lorsque les réponses d'autorisation pour les multiples opérations indiquent une réussite.

8. Procédé selon la revendication 6 ou 7, dans lequel l'envoi du résultat d'opération à l'agent de gestion comprend :
le retour (414) d'un message d'échec à l'agent de gestion lorsque l'information d'autorisation indique un échec ;
la réalisation (416) d'une ou plusieurs opérations en fonction de la demande d'opération d'utilisateur lorsque l'information d'autorisation indique une réussite ; et
le retour (418) du résultat d'opération à l'agent de gestion.
